# EUROPEAN PATENT SPECIFICATION

(11) **EP 3 240 400 B1**
(45) Date of publication and mention of the grant of the patent: **27.05.2020**
(21) Application number: 15832758.5
(22) Date of filing: 28.12.2015
(51) Int. Cl.: A01K 1/12, A01J 5/017, A01J 7/04

(54) **A ROTARY MILKING SYSTEM**
DREHENDES MELKSYSTEM
SYSTÈME DE TRAITE ROTATIVE

(30) Priority: 30.12.2014 SE 1451669
(43) Date of publication of application: 08.11.2017
(73) Proprietor: DeLaval Holding AB, 147 21 Tumba (SE)
(72) Inventor: HÄLLMAN, Jonas, 147 21 Tumba (SE); NILSSON, Mats, 147 21 Tumba (SE); OBERMÜLLER, Helmut, 147 21 Tumba (SE)
(74) Representative: Lilliehorn, Tobias
(86) International application number: PCT/SE2015/051395
(87) International publication number: WO 2016/108749

(56) References cited:
- EP-A1- 2 241 179
- EP-A1- 2 685 809
- EP-A2- 0 647 390
- WO-A1-01/28315
- WO-A1-01/72116
- WO-A1-2010/052156
- WO-A1-2014/204395
- DE-A1-102012 215 751

## Description

### BACKGROUND OF THE INVENTION AND PRIOR ART

The invention relates to a rotary milking system according to the preamble of claim 1. A rotary milking system comprises a milking platform, which rotates during milking. A plurality of milking stalls are arranged on the milking platform, each of which being provided with milking equipment and being arranged to house a milking animal during milking thereof, while the milking platform rotates.

Further, the rotary milking system comprises an entrance area wherein the milking animals enter the milking stalls in a serial order as the rotating animal milking platform rotates. During rotation of the milking platform, the teats of the milking animals may be cleaned, teat cups of the milking equipment of the milking stalls are attached to the milking animals present in the milking stalls, and the milking animals are milked. The teats of the milking animals may be treated subsequent to the milking thereof, after which the milking animals leave the milking stalls and the milking platform at an exit area when the milking animals have rotated nearly a full revolution. The rotational speed is adapted to the milking times of the milking animals such that ideally there is enough time for the milking animals on the milking platform to be milked appropriately.

During the last years robotic arrangements have been developed which may take care of one or more of the pre-milking cleaning, the teat cup attachment, and the post-milking treatment actions in an automated manner.

Although a teat cup will be typically attached to the teats of a milking animal before the milking stall has moved a significant distance, unpredictable events such as movement by an unsettled milking animal can significantly delay the teat cup attachment process. This is not necessarily problematic when a human operator services the milking stalls because the operator can walk with the milking platform and remain with the particular stall experiencing the delay. However, delays in servicing a milking stall can be problematic in circumstances where a robot is being used for the servicing activity. This is because the robot arm has a fixed position within the rotary milking system and so a milking stall will tend to move quite rapidly beyond its reach. This problem is also a particular issue when the speed of the milking stalls is comparatively high. This may be found in large rotary milking systems where the linear tangential speed of a stall will be comparatively high for a given angular speed because of the comparatively large platform radius.

WO 2010/119079 addresses these problems and discloses a solution wherein two robotic manipulation devices are provided side by side to attach the teat cups to the teats of an animal in each milking stall as the milking stall moves past the robotic manipulation devices while the platform is rotated. Hereby, each robotic manipulation device attaches only two teat cups to the teats of each animal. The document also discloses that similar arrangement may be provided for attaching cleaning teat cups to the teats of the animal.

In another embodiment WO 2010/119079 discloses four robotic manipulation devices provided side by side wherein each one of the four robotic manipulation devices is operable to attach successively one teat cup to a teat of an animal in each milking stall as the milking stall moves past the robotic manipulation device while the platform is rotated.

Another rotary milking installation is known from EP 2241179 A1, it discloses the preamble of claim 1.

### SUMMARY OF THE INVENTION

The object of the present invention is to speed up the attachment processes of the cleaning teat cups and milking teat cups to the teats of a milking animal in order to provide a rotary milking system by which higher throughput of milking animals through the rotary milking system can be obtained as compared to prior art systems. Hereby, the utilization rate of the capacity of the rotary milking system is increased.

This above mentioned objects are achieved by the features defined in the charactering part of claim 1.

If only two robotic manipulation devices are provided for the teat cup attachment, it has been noted that still there may be too high frequency of failed teat cup attachments, especially for some groups or herds of animals and/or for large rotary milking systems wherein the linear tangential speed of the milking stalls is high.

If four robotic manipulation devices are provided for the attachment of the teat cups, still another solution would be required for the cleaning of the teats prior to milking.

The provision of four further robotic manipulation devices for the attachment of cleaning teat cups would be impractical; it would be costly, it would occupy a considerable part around the platform, and it would lower the throughput of animals through the rotary milking system since the rotational speed of the platform would have to be lowered such that the animals will have time to get milked during their rotation on the platform after that the teat cups have been attached to the teats thereof. As a result, the utilization of the milking capacity of the rotary milking system will not be optimized.

According to the invention, four robotic manipulation devices are used to attach a cleaning teat cup to a teat of an animal and a milking teat cup to the same teat in order to provide a cleaning process of the teat before the milking process starts. Each robotic manipulation device moves the cleaning teat cup and the milking teat cup, by a common movement, to a position below the teats of the animal before the teat cups are attached to a teat. Such a common movement of a cleaning teat cup and a milking teat cup to a position below the teats of an animal reduces the number of movements of the robotic manipulation device and the time required for the teat cup attachments. Consequently, the robotic manipulation device does not need to provide separate fetching movement of the cleaning teat cup and the milking teat cup. The reduced number of movements of the robotic manipulation devices speeds up the attaching processes of the teat cups.

According to the invention, the cleaning teat cup and the milking teat cup which are attached to the same teat of an animal by one of the robotic manipulation devices are two separate teat cups. In this case, the robotic manipulation device already carries a cleaning teat cup when it fetches the milking teat cup in a milking stall. The robot manipulation device may comprise a gripper for gripping the cleaning teat cup and a griper for gripping the milking teat cup. In this case, the robot manipulation device may grip the cleaning teat cup before it grips the milking teat cup in a milking stall whereupon it moves the cleaning teat cup and the milking teat cup to a position below the teats of an animal in the milking stall.

According to an embodiment of the invention, each robotic manipulation device is configured to permanently carry the cleaning teat cup during operation of the rotary milking system. In this case, the robotic manipulation device may comprise a permanent attachment member carrying the cleaning teat cup. Alternatively, the robotic manipulation device may comprise a gripper which permanently carries the cleaning teat cup during operation of the rotary milking system. In this case, the cleaning teat cup can be stored in a magazine when the rotary milking system is not in operation.

According to the invention, each robotic manipulation device comprises at least one cover element movably arranged between a first position in which it covers the teat receiving opening of one of the teat cups and a second position in which it uncover the teat receiving opening of said teat cup. In order to prevent penetration of contamination into the not used teat cup, it is suitable to cover the teat receiving opening with such a covering element. Each robotic manipulation device may comprise at least one actuator configured to move the cover element between the first position and the second position. The actuator may be of an arbitrary kind such as a pneumatic cylinder, hydraulic cylinder or an electric motor.

According to an embodiment of the invention, each robotic manipulation device may comprise at least one actuator configured to move the milking teat cup and the cleaning teat cup between an inactive position and an active position from which the respective teat cups are attached to the teat. In order to facilitate the attachment of a teat cup in an active position, it is important that the other teat cup is in an inactive position in which it does not inhibit the attachment process of the active teat cup. In this case, the gripper of the second teat cups may be moved to a suitable inactive position by an actuator. The actuator may be of an arbitrary kind such as a pneumatic cylinder, a hydraulic cylinder or an electric motor which provide a rotary or linear movement of the gripper and the second teat cup.

According to an embodiment of the invention, when a robotic manipulation device has moved the milking teat cup and the cleaning teat cup to a position below the teats of the animal, it is configured to attach the cleaning teat cup to a teat of the animal, to remove the cleaning teat cup from the teat when a cleaning process of the teat is finished and to attach the milking teat cup to the cleaned teat. Since both teat cups already are in a position close to said teat, it is possible to provide the above mentioned relatively small movements in a quick manner.

Further characteristics of the invention and advantages thereof will be evident from the following detailed description of embodiments.

### BRIEF DESCRIPTION OF THE DRAWINGS

Fig. 1 illustrates schematically, in a perspective view, a rotary milking system.
Figs. 2a-b illustrate each schematically, in a top view, parts of a rotary milking system of Fig. 1.
Figs. 3a-b illustrate schematically, in side views, a preparing arrangement configured to move each of a plurality of combined cleaning teat and milking teat cups from a storage position to a prepared in-between position.
Figs. 4a-b illustrate schematically, in top and side sectional views, an alternative preparing arrangement configured to move each of a plurality of combined cleaning teat and milking teat cups from a storage position to a prepared in-between position.
Fig. 5a illustrates schematically, in a block view, parts of the rotary milking system of Fig. 1.
Fig. 5b illustrate schematically, in a side sectional view, a combined cleaning teat and milking teat cup with connections and valve arrangements as comprised in the rotary milking system of Fig. 5a.
Fig. 6 illustrates a first embodiment of an end effector of a robotic manipulation device according to the invention,
Fig. 7 illustrates a second embodiment of an end effector of a robotic manipulation device according to the invention,
Fig. 8a-b illustrate a third embodiment of an end effector of a robotic manipulation device according to the invention,
Fig. 9a-b illustrate a fourth embodiment of an end effector of a robotic manipulation device according to the invention and
Fig. 10 illustrates a fifth embodiment of an end effector of a robotic manipulation device according to the invention.

Similar features are denoted by same reference numerals throughout the drawings.

### DETAILED DESCRIPTION OF EMBODIMENTS

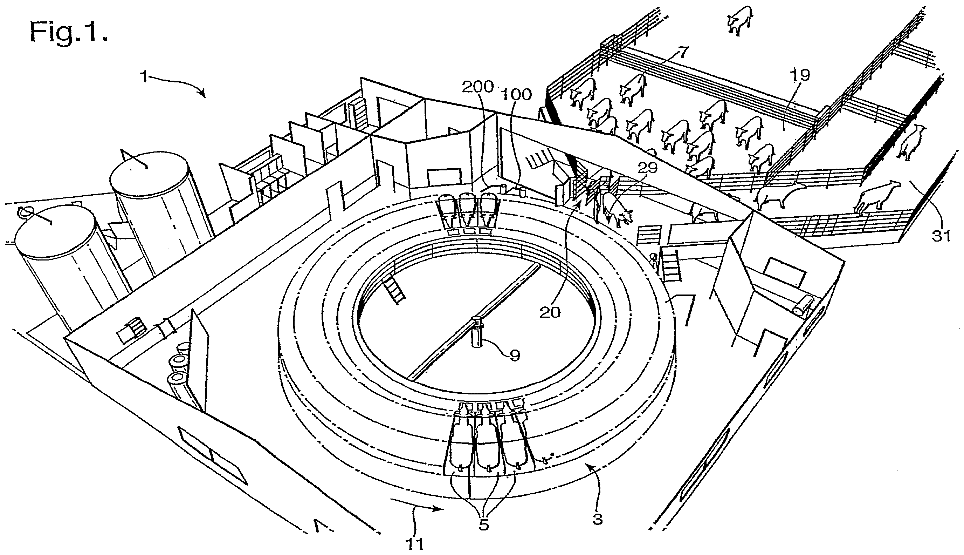

A parallel rotary milking system 1 is shown in Fig. 1. The rotary milking system 1 comprises a rotatable milking platform 3 having an annular shape and being provided with a plurality of milking stalls 5 arranged side by side circumferentially along the milking platform 3. Since the rotary milking system 1 is of a parallel rotary type, the milking stalls 5 are arranged so that a milking animal 7 to be milked stands in a milking stall 5 facing radially inwards towards the center 9 of rotation of the milking platform 3. In use, the milking platform 3 is rotated by suitable drive means in an anticlockwise direction as indicated by arrow 11. With reference to Fig. 1, it will be understood that milking animals 7 to be milked congregate in a holding bay 19 and walk onto the milking platform 3 one by one at a stall entry area 20. The entry area 20 comprises an animal walk way having a width substantially equal to that of a milking stall 5. This width is sufficient for a milking animal to comfortably walk through the walk way and into a milking stall 5, but is not so great as to allow the passage of two milking animals 7 side-by-side. In this way, milking animals 7 are prevented from entering milking stalls 5 of the milking platform 3 simultaneously. It will be understood that the speed of rotation of the milking platform 3 is sufficiently low for a milking animal 7 to step onto the milking platform 3 and walk into a passing milking stall 5. It will also be understood that, once a milking animal 7 has entered a milking stall 5, further rotation of the milking platform 3 closes the milking stall 5 so as to prevent the milking animal 7 from backing out of the milking stall 5. Each milking stall 5 is provided with four combined cleaning teat and milking teat cups connected to a milking system by means of hoses.

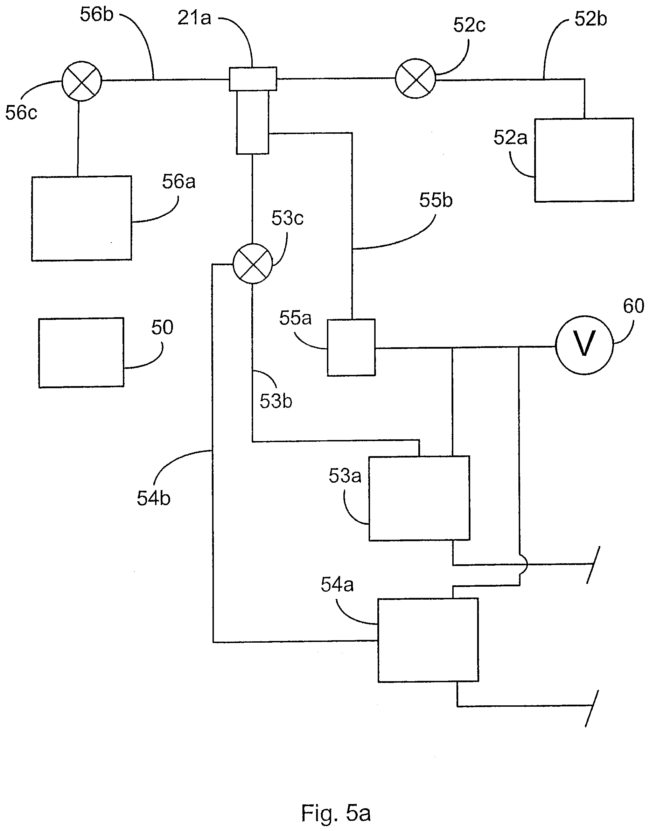

As will be explained in more detail below with reference to Figs. 5a-b, these combined cleaning teat and milking teat cups 21a-d are each individually connectable to a source 52a of cleaning fluid via a cleaning fluid supply line 52b by means of a first valve arrangement 52c associated with the combined cleaning teat and milking teat cup 21a-d. Further, the combined cleaning teat and milking teat cups 21a-d are each individually connectable either to a vacuum supplied milk collection vessel 53a via a milk line 53b or to a cleaning fluid divert line 54b by means of a second valve arrangement associated with the combined cleaning teat and milking teat cup 21a-d. A control arrangement 50 is provided for controlling the first 52c and second 53c valve arrangements. By such combined cleaning teat and milking teat cups 21a-d pre-milking cleaning teat and milking may be performed sequentially and individually for each teat of a milking animal to be milked. Further, post-milking treatment of each teat may optionally be performed individually by each combined cleaning teat and milking teat cup 21a-d.

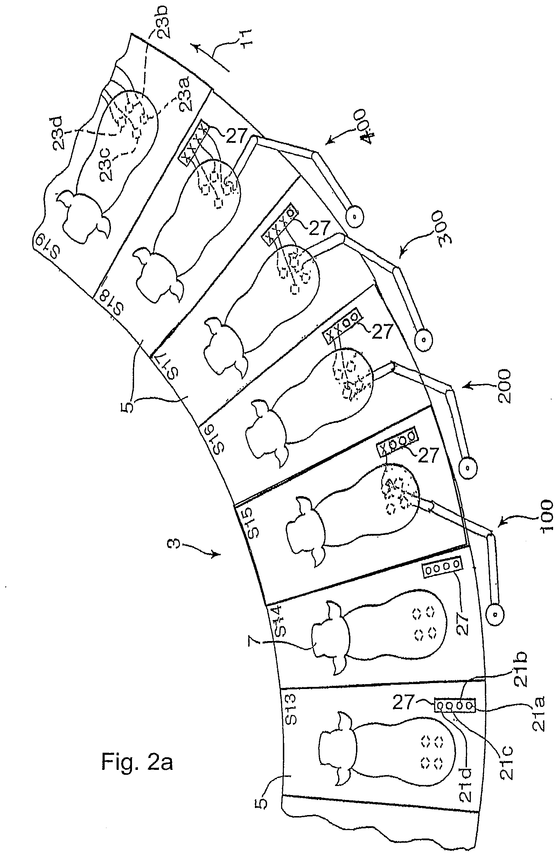

As will be explained in more detail below with reference to Figs. 2a-b, these combined cleaning teat and milking teat cups 21a-d are automatically attached to the teats 23a-d of a milking animal 7 by means of four robotic manipulation devices 100, 200, 300, 400. Once the combined cleaning teat and milking teat cups 21a-d are attached to the teats 23a-d, the milking animal 7 will have its teats 23a-d cleaned and milked whilst the milking platform 3 continues to rotate. Once milking has been completed, the combined cleaning teat and milking teat cups 21a-d are removed from the teats 23a-d by means of an automatic teat cup retraction system (not shown) which pulls on the hose associated with each combined cleaning teat and milking teat cup 21a-d and withdraws the combined cleaning teat and milking teat cup 21a-d back into a magazine 27. If the combined cleaning teat and milking teat cups 21a-d are used also for post-milking treatment, they are removed from the teats 23a-d firstly after the post-milking treatment has been performed.

Once the combined cleaning teat and milking teat cups 21a-d have been retracted into the magazine 27, the milking stall 5 in which the milking animal 7 is located will shortly thereafter move to a stall exit are 29 (see Fig. 1), in which a milking stall 5 is arranged in an open configuration so that a milking animal 7 located therein may back out of the milking stall 5 and leave the rotary milking system 1 by means of an exit walkway 31.

Fig. 2a illustrates, in a top view, parts of the rotary milking system 1 of Fig. 1. Seven milking stalls 5 of the milking platform 3 are shown numbered from S13 to S19. The magazine 27 of each milking stall 5 is arranged in a right-hand back part of the milking stall 5. A first robotic manipulation device 100 is configured to attach a first combined cleaning teat and milking teat cup 21d of each of the milking stalls 5 housing a milking animal 7 to a first teat of that milking animal 7 as the milking stall 5 passes by the first robotic manipulation device 100. A second robotic manipulation device 200 is configured to attach a second combined cleaning teat and milking teat cup 21c of each of the milking stalls 5 housing a milking animal 7 to a second teat of the milking animal 7 as the milking stall 5 passes by the second robotic manipulation device 200. A third robotic manipulation device 300 is configured to attach a third combined cleaning teat and milking teat cup 21b of each of the milking stalls 5 housing a milking animal 7 to a third teat of the milking animal 7 as the milking stall 5 passes by the third robotic manipulation device 300. Finally, a forth robotic manipulation device 400 is configured to attach a forth combined cleaning teat and milking teat cup 21a of each of the milking stalls 5 housing a milking animal 7 to a forth teat of the milking animal 7 as the milking stall 5 passes by the forth robotic manipulation device 400. Preferably, the first teat is a right front teat, the second teat is a left front teat, the third teat is a right rear teat, and the fourth teat is a left rear teat for a milking platform 3 rotating as indicated by the arrow 11.

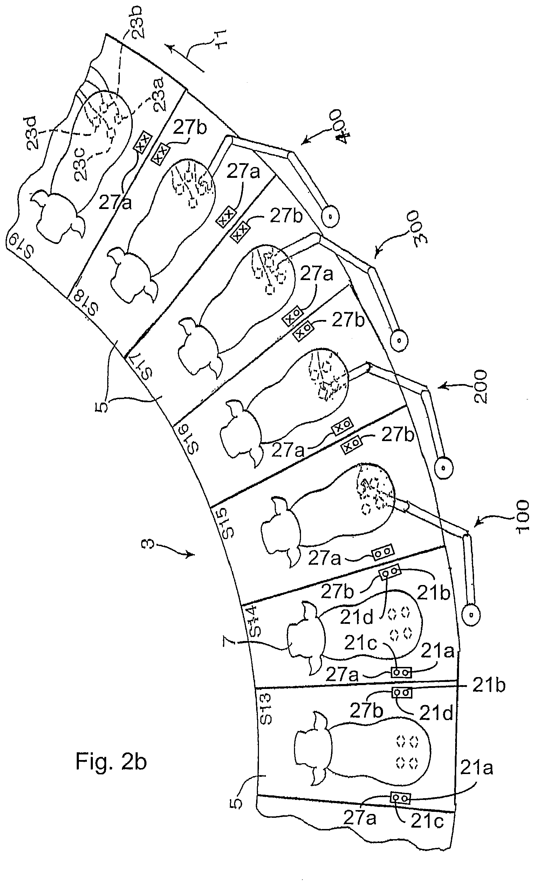

It shall be appreciated that the combined cleaning teat and milking teat cups that are still located in the magazine 27 are each indicated by a circle, whereas empty positions in the magazine are denoted by an X (which indicates that the respective combined cleaning teat and milking teat cup has already been fetched by one of the robotic manipulation devices 100, 200, 300, 400). In Fig. 2, the following scenario can be derived.

The first robotic manipulation device 100 has already attached the combined cleaning teat and milking teat cup 21d of the magazine 27 of each of the milking stalls numbered S16-S19 to a teat of a respective milking animal 7 in that milking stall, and has fetched the combined cleaning teat and milking teat cup 21d from the magazine 27 of the milking stall numbered S15 and is attaching it to a teat of a milking animal 7 in that milking stall, but has not yet fetched the combined cleaning teat and milking teat cups 21d from the magazines 27 of the milking stall numbered S13-S14.

The second robotic manipulation device 200 has already attached the combined cleaning teat and milking teat cup 21c of the magazine 27 of each of the milking stalls numbered S17-S19 to a teat of a respective milking animal 7 in that milking stall, and has fetched the combined cleaning teat and milking teat cup 21c from the magazine 27 of the milking stall numbered S16 and is attaching it to a teat of a milking animal 7 in that milking stall, but has not yet fetched the combined cleaning teat and milking teat cups 21C from the magazines 27 of the milking stall numbered S13-S15.

The third robotic manipulation device 300 has already attached the combined cleaning teat and milking teat cup 21b of the magazine 27 of each of the milking stalls numbered S18-S19 to a teat of a respective milking animal 7 in that milking stall, and has fetched the combined cleaning teat and milking teat cup 21b from the magazine 27 of the milking stall numbered S17 and is attaching it to a teat of a milking animal 7 in that milking stall, but has not yet fetched the combined cleaning teat and milking teat cups 21b from the magazines 27 of the milking stall numbered S13-S16.

The fourth robotic manipulation device 400 has already attached the combined cleaning teat and milking teat cup 21a of the magazine 27 of the milking stall numbered S19 to a teat of the milking animal 7 in that milking stall, and has fetched the combined cleaning teat and milking teat cup 21a from the magazine 27 of the milking stall numbered S18 and is attaching it to a teat of a milking animal 7 in that milking stall, but has not yet fetched the combined cleaning teat and milking teat cups 21a from the magazines 27 of the milking stall numbered S13-S17.

The control arrangement (Fig. 5a) is configured, for each combined cleaning teat and milking teat cup 21a-d attached to a teat, to individually control the first valve arrangement 52c arrangement associated with the combined cleaning teat and milking teat cup 21a-d to connect the combined cleaning teat and milking teat cup 21a-d to the source 52a of cleaning fluid to apply cleaning fluid to the teat and individually control the second valve arrangement 53c associated with the combined cleaning teat and milking teat cup 21a-d to connect the combined cleaning teat and milking teat cup 21a-d to the cleaning fluid divert line 54b to divert the cleaning fluid, and thereafter individually control the second valve arrangement 33c associated with the combined cleaning teat and milking teat cup 21a-d to connect the combined cleaning teat and milking teat cup 21a-d to the vacuum supplied milk collection vessel 53a to milk the teat.

Each magazine 27 in Fig. 2a is located at a side portion of, and adjacent the entrance of, the associated milking stall 5 so as to not unduly hinder access by a milking animal 7 to the milking stall 5 and so as to be positioned adjacent the rear of a milking animal 7 standing in the milking stall 5. The magazine 27 will therefore be understood to hold the combined cleaning teat and milking teat cup 21a-d in a known storage position which is readily accessed by each robotic manipulation device 100, 200, 300, 400 and which is sufficiently close to the teats 23a-d of the milking animal 7 to allow ready movement of the combined cleaning teat and milking teat cup 21a-d to the teats 23a-d from the magazine 27.

To this end, Fig. 2b illustrates schematically, in a top view, parts of rotary milking system of Fig. 1, which differs from the rotary milking system of Fig. 2a only with respect to the magazines 27.

Here, each magazine is divided into two magazine parts 27a, 27b arranged at opposite sides of the respective milking stall 5. The teat cups 21c, 21a that are to be attached to the left front and rear teats of each milking animal 7 are located in the magazine part 27a located at the left-hand side of the respective milking stall 5 and the teat cups 21d, 21b that are to be attached to the right front and rear teats of each milking animal 7 are located in the magazine part 27b located at the right-hand side of the respective milking stall 5.

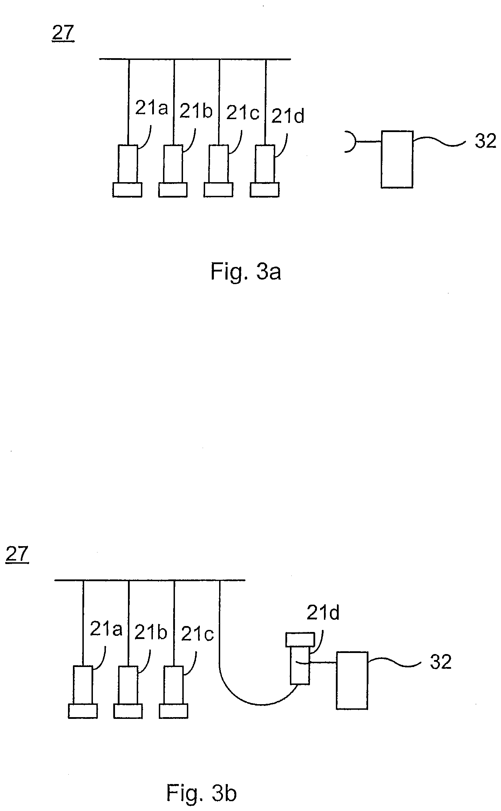

Figs. 3a-b illustrate schematically, in side views, a preparing arrangement 32 configured to move each of a plurality of combined cleaning teat and milking teat cups 21a-d from a storage position to a prepared in-between position, from which the robotic manipulation devices 100, 200, 300, 400 (Fig. 2a) are configured to fetch the combined cleaning teat and milking teat cups 21a-d. The movement of the combined cleaning teat and milking teat cups 21a-d to the prepared in-between position facilitates for the robotic manipulation devices 100, 200, 300, 400 to fetch the combined cleaning teat and milking teat cups 21a-d and attach the combined cleaning teat and milking teat cups 21a-d to the teats of the milking animal 7.

In Fig. 3a four combined cleaning teat and milking teat cups 21a-d of a milking stall is arranged in a storage position with their teat receiving openings facing downwards, wherein the preparing arrangement 32 is configured to move each of the combined cleaning teat and milking teat cups 21a-d of the milking stall 5 to the prepared in-between position, at which the teat receiving opening of the combined cleaning teat and milking teat cup 21a-d is facing upwards. In Fig. 3b, the preparing arrangement 32 has moved one 21d of the combined cleaning teat and milking teat cups 21a-d to the prepared in-between position while awaiting for the first robotic manipulation devices 100 to fetch it. The other three combined cleaning teat and milking teat cups 21a-c have not yet been moved to the prepared in-between position.

While the preparing arrangement 32 may be implemented in a variety of manners, the illustrated preparing arrangement 32 comprises a gripper for gripping the combined cleaning teat and milking teat cups 21a-d, one at a time, and a rotation mechanism for rotating the gripper 180 degrees in a vertical plane to move the combined cleaning teat and milking teat cup 21a-d to the prepared in-between position.

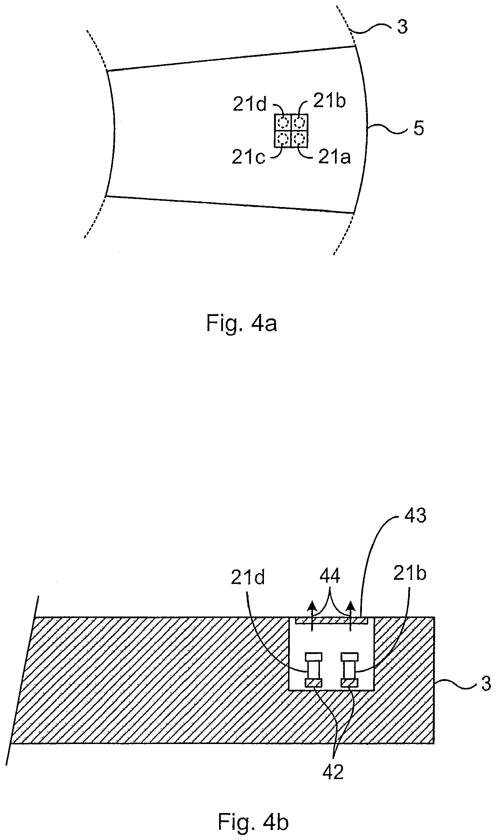

Figs. 4a-b illustrate schematically, in top and side sectional views, a preparing arrangement 42 configured to move each of a plurality of combined cleaning teat and milking teat cups from a storage position to a prepared in-between position. Here, the combined cleaning teat and milking teat cups 21a-d are stored within the floor of the milking platform 3 with their teat receiving openings facing upwards, and the preparing arrangement 42 is configured to move each of the combined cleaning teat and milking teat cups 21a-d of each milking stall 5 housing a milking animal 7, to the prepared in-between position, which is located above the floor of the milking platform 3.

Preferably, each of the combined cleaning teat and milking teat cups 21a-d is covered by a hatch 43 or similar while being stored within the floor. When a combined cleaning teat and milking teat cup 21a-d is to be moved from the storage position to the prepared in-between position, the hatch 43 above the combined cleaning teat and milking teat cup 21a-d is opened and the preparing arrangement 42 moves the combined cleaning teat and milking teat cup 21a-d linearly upwards as indicated by arrows 44 to the prepared in-between position.

While, the preparing arrangement 42 may be implemented in a variety of manners, the illustrated preparing arrangement 42 comprises, for each of the combined cleaning teat and milking teat cups 21a-d, a device configured to move that combined cleaning teat and milking teat cup 21a-d vertically upwards.

One implementation of a storage facility and preparing arrangement that can be used is disclosed in WO 2011/098994, the contents of which being hereby incorporated by reference.

Fig. 5a illustrates schematically, in a block view, parts of the rotary milking system of Fig. 1. Each of the combined cleaning teat and milking teat cups 21a-d is individually connectable to the source 52a of cleaning fluid via the cleaning fluid supply line 52b by means of the first valve arrangement 52c associated with the combined cleaning teat and milking teat cup. Further, each of the combined cleaning teat and milking teat cups 21a-d is individually connectable either to the vacuum supplied milk collection vessel 53a via the milk line 53b or to the cleaning fluid divert line 54b by means of the second valve arrangement 53c associated with the combined cleaning teat and milking teat cup 21a-d. The milk collection vessel 53a is supplied with vacuum from a vacuum source 60.

Further, each of the combined cleaning teat and milking teat cups 21a-d is connectable to a pulsator 55a via a pulsating vacuum line 55b. The pulsator 55a is, in turn, supplied with vacuum from the vacuum source 60, and is arranged to apply a pulsating vacuum to the combined cleaning teat and milking teat cup 21a-d during milking.

The cleaning fluid divert line 54b may, as illustrated, be connected to a vessel 54a, which in turn may be connected to the vacuum source 60 used cleaning fluid may be sucked through the cleaning fluid divert line 54b and into the vessel 54a. The used cleaning fluid may be pumped from the vessel 54a and out of the milking platform 3 via a swivel connection e.g. arranged in the center of the milking platform. Alternatively, the cleaning fluid divert line 54b is connected to drain.

The milk collection vessel 53a and the vessel 54a may be located under the milking platform 3.

Each of the combined cleaning teat and milking teat cups 21a-d may optionally be individually connectable to a source 56a of post-milking treatment substance via a post-milking treatment substance supply line 56b by means of a third valve arrangement 56c associated with the combined cleaning teat and milking teat cup 21a-d.

The control arrangement 50 is configured, for each combined cleaning teat and milking teat cup 21a-d attached to a teat, to individually control the third valve arrangement 56c associated with the combined cleaning teat and milking teat cup 21a-d to connect the combined cleaning teat and milking teat cup 21a-d to the source 56a of post-milking treatment substance to apply post-milking treatment substance to the teat after the teat has been milked.

The control arrangement may be configured, for each combined cleaning teat and milking teat cup 21a-d attached to a teat, to individually control the second valve arrangement 53c associated with the combined cleaning teat and milking teat cup 21a-d to disconnect the combined cleaning teat and milking teat cup 21a-d from vacuum and to individually control the third valve arrangement 56c associated with the combined cleaning teat and milking teat cup 21a-d to connect the combined cleaning teat and milking teat cup 21a-d to the source 56a of post-milking treatment substance in connection with the combined cleaning teat and milking teat cup 21a-d being removed from the teat after milking thereof.

Alternatively, applicable to a rotary milking system wherein each of the cleaning fluid divert lines is vacuum supplied, the control arrangement 60 may be configured, for each combined cleaning teat and milking teat cup 21a-d attached to a teat of a particular milking animal, whose milk should not be mixed with milk from other milking animals, to individually control the first valve arrangement 52c associated with the combined cleaning teat and milking teat cup 21a-d to connect the combined cleaning teat and milking teat cup 21a-d to the source 52a of cleaning fluid to apply cleaning fluid to the teat and individually control the second valve arrangement 53c associated with the combined cleaning teat and milking teat cup 21a-d to connect the combined cleaning teat and milking teat cup 21a-d to the vacuum supplied cleaning fluid divert line to divert the cleaning fluid, and to thereafter keep the combined cleaning teat and milking teat cup 21a-d connected to the vacuum supplied cleaning fluid divert line 54b to milk the teat and divert the milk through the vacuum supplied cleaning fluid divert line 54b.

While there is typically provided a common milk collection vessel 53a, a common vessel 54a, a common source 52a of cleaning fluid, and a common source 56a of post-milking treatment substance for the combined cleaning and milking teat cup 21a-d of all milking stalls 5, there are no restrictions in this respect. For instance, there may be provided one source 52a of cleaning fluid and one source 56a of post-milking treatment substance for each milking stall 6. Further, one vessel 54a may be provided for each milking stall 5.

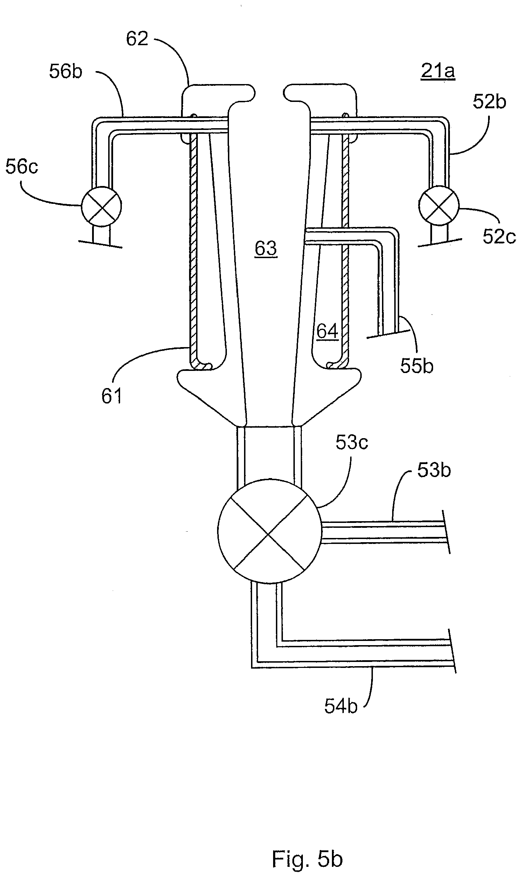

Fig. 5b illustrate schematically, in a side sectional view, a combined cleaning teat and milking teat cup 21a with connections and valve arrangements as comprised in the rotary milking system of Fig. 5a.

The combined cleaning teat and milking teat cup 21a comprises a rigid shell 61 and a flexible teat liner 62, which together defines an annular space 64. The cleaning fluid supply line 52b and the optional post-milking treatment substance supply line 56b are connected via the first and third valve arrangements 52c, 56c to the interior 63 of the flexible teat liner 62 in an upper portion close to the teat receiving opening of the teat cup 21a, while the milk line 53b and the cleaning fluid divert line 54b are connected via the second valve arrangement 53c to the interior 63 of the flexible teat liner 62 in a lower portion thereof. The pulsating vacuum line 55b is connected to the annular space 64 between the rigid shell 61 and the flexible teat liner 62.

Since the combined cleaning teat and milking teat cup 21a comprises individually controllable valve arrangements, the teat cleaning, the milking, and the optional post-milking teat treatment may be performed individually for each teat of a milking animal.

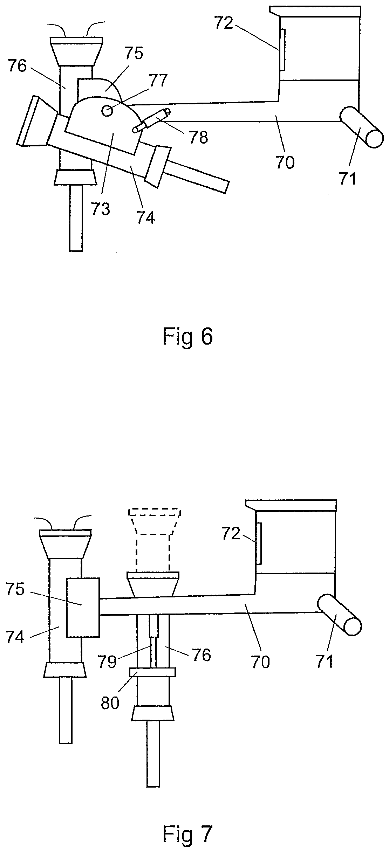

Fig. 6 illustrates an end effector ₇₀ which constitutes an outer end portion of one of the robotic manipulation devices 100, 200, 300, 400. The end effector 70 carries a camera 72 at an inner end. The end effector 70 carries, at an outer end, a first griping member 73 configured to releasably grip a milking teat cup 74 and a second gripping member 75 configured to releasably grip a cleaning teat cup 76. The gripping members 73, 75 may include an electro magnet or movably arranged grip portions which releasably grip the teat cups 73, 75. The gripping members 73, 75 are pivotally connected to the end effector 70 via a common pivot 77. A first actuator 78 provides a pivot movement of the first gripping member 73 in relation to the end effector 70 between an inactive inclined position and an active upright position from which the milking teat cup 74 is attached to a teat of an animal. A second actuator, which is not visible, provides a corresponding pivot movement of the second gripping member 75 between an inactive inclined position and an active upright position from which the cleaning teat cup 76 is attached to the same teat as the milking teat cup 74.

After start of the rotary milking platform 3, the robotic manipulation device 100 fetches a cleaning teat cup 76 in a cleaning teat cup magazine by means of the gripping member 75. The cleaning teat cup magazine may be arranged in a position close to the robotic manipulation device 100 at the side of the rotary platform 3. As soon as a milking stall 5 with an animal enters a position close to one of the robotic manipulation device 100, it fetches a milking teat cup 74 from a milking teat cup magazine arranged in or close to the milking stall 5. After that, the robotic manipulation device 100 provides a movement of the cleaning teat cup 76 and the milking teat cup 74 to a position below the teats of the animal. During this movement, the cleaning teat cup 76 and the milking teat cup 74 may be in the inactive inclined position. When the teat cups 74, 76 reaches the position below the teats of the animal, the cleaning teat cup 76 is moved to the active upright position by the second actuator. The robotic manipulation device 100 attaches the cleaning teat cup 76 to a teat of the animal, which is seen in Fig. 6. As soon as a cleaning process of the teat is finished, the cleaning teat cup 76 is removed from the teat. The second actuator moves the cleaning teat cup to the inactive inclined position at the same time as the first actuator 78 moves the milking teat cup 74 to the active upright position. The robotic manipulation device 100 provides thereafter a movement at which it attaches the milking teat cup 74 to the same teat. The remaining three robotic manipulation devices 200, 300, 400 provide in proper order attachment of one cleaning teat cup 76 and one milking teat cup to the remaining teats of the animal.

As long as milking processes are in progress on the platform ₃, the gripping member 76 holds the cleaning teat cup 76 in a permanently grip. Consequently, when a milking stall 5 with an animal enters a position close to, for example, the first robotic manipulation device 100, the first robotic manipulation device 100 moves its end effector 70 with the cleaning teat cup 76 to a position in which the first gripping member 75 grips a milking teat cup 74 in a milking teat cup magazine in the milking stall. Thereafter, the milking teat cup 74 and the cleaning teat cup 76 are together moved to the position below the teats of the animal whereupon the teat cups 74, 76 in proper order are attached to one and the same teat of the animal. Since the cleaning teat cup 76 is in a permanent grip on the end effector 70, it is not necessary to fetch the cleaning teat cup 76 when it is time to provide a cleaning process of a teat. Thus, it is possible to reduce the number of movements of the robotic manipulation device. When the operation of the milking rotary platform is ended such as occasions when the components on and around the milking platform are to be washed, the cleaning teat cup 76 is moved to the cleaning teat cup magazine.

Fig. 7 illustrates an alternative design of the end effector 70. In this case, the cleaning teat cup 76 is permanently attached in a through hole of the end effector 70. However, the cleaning teat cup 76 is movable arranged in a vertical direction between in inactive position which is shown in Fig. 7 and an active position which is indicated with dotted lines. An actuator 79 moves the cleaning teat cup 76 from the inactive to the active position. As soon as a milking stall 5 with an animal enters to a position close to, for example, the first robotic manipulation device 100, it fetches a milking teat cup in a milking teat cup magazine in the milking stall. During this movement the cleaning teat cup 76 is in the inactive position. The first robotic manipulation device 100 moves the teat cups 74, 76 to a position below the teats of the animal. The actuator 79 moves the cleaning teat cup 76 to the active position by whereupon the robotic manipulation device 100 attaches the cleaning teat cup 76 to a teat of the animal, which is seen in Fig. 7. As soon as a cleaning process of the teat is finished, the cleaning teat cup 76 is removed from the teat. The second actuator moves the cleaning teat cup 76 to the inactive position. Thereafter, the robotic manipulation device 100 provides a movement at which the milking teat cup 74 is attached to the cleaned teat which is seen in Fig. 7.

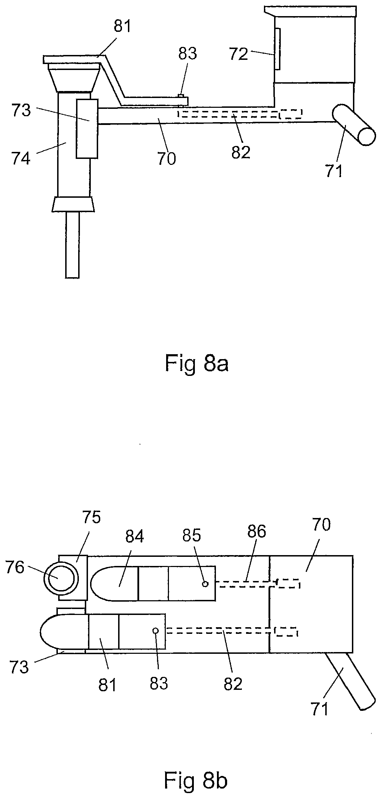

Fig. 8a-b illustrate a further embodiment of the end effector 70. In this case, the end effector 70 comprises a first gripping member 73 for gripping of a milking teat cup 74 and a second gripping member 75 for gripping of a cleaning teat cup 76. The gripping members 73, 75 are arranged side by side at a front portion of the end effector 70. A first cover element 81 is configured to cover a teat receiving opening of the milking teat cup 74 and a second cover element 84 is configured to cover a teat receiving opening of the cleaning teat cup 76. The cover elements 81, 84 are slidably arranged between a closed position and an open position by means of a respective actuator 82, 86 which each are connected to the cover element 81,84 via a connecting member 8₃, 85.

When a milking stall 5 with an animal enters to a position close to the robotic manipulation device 100, the end effector 70 provides a movement in which it fetches a milking teat cup 74 in a milking teat cup magazine in the milking stall whereupon it moves the milking teat cup 74 and the cleaning teat cup 76 to a position below the teats of the animal. During this movement the cover elements 81, 84 are in a closed position in order to prevent penetration of contaminations into the milking teat cup 74 and the cleaning teat cup 76. When the milking teat cup and the cleaning teat cup have reached the position below the teats of an animal, the actuator 86 moves the second cover element 84 to an open position, which is seen in Fig. 8b. After that, the robotic manipulator device 100 attaches the cleaning teat cup 76 to a teat of the animal. As soon as a cleaning process of the teat is finished, the cleaning teat cup 76 is removed from the teat. The second actuator 86 moves the second cover element 84 to the closed position at the same time as the first actuator 82 moves the first cover element 81 to an open position. The robotic manipulation device 100 provides thereafter a movement at which the milking teat cup 74 is attached to the cleaned teat.

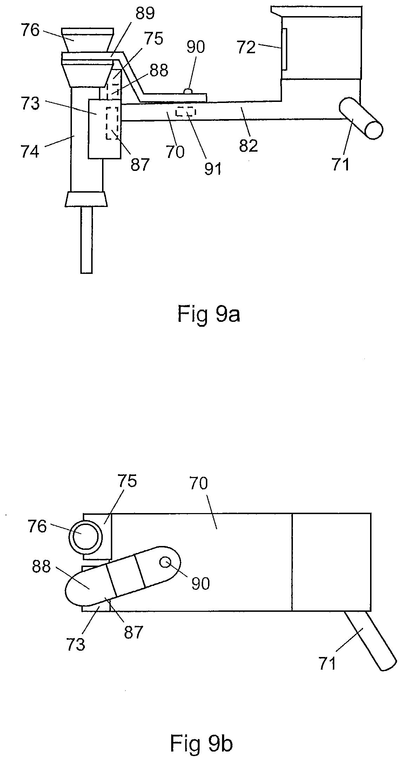

Fig. 9a-b illustrate a further embodiment of the end effector 70. In this case, the end effector 70 comprises a first gripping member 73 for gripping of a milking teat cup 74 and a second gripping member 75 for gripping of a cleaning teat cup 76. The gripping members 73, 75 are arranged side by side at a front portion of the end effector 70. The end effector 70 comprises a first actuator 87 configured to provide a movement of the first gripping member 73 in a vertical direction between an inactive low position and an active upper position. The end effector 70 comprises a second actuator 88 configured to provide a movement of the second gripping member 75 in a vertical direction between an inactive low position and an active upper position. A cover element 89 is configured to alternatively cover a teat receiving opening of the milking teat cup 74 and a teat receiving opening of the cleaning teat cup 76. The cover element 89 is pivotally arranged around a pivot 90 between a first position in which it covers the opening of the milking teat cup 74 and a second position in which it covers an opening of the cleaning teat cup 76. A schematically indicated actuator 91 is configured to provide the movement of the cover element 89 between said two positions.

When a milking stall 5 with an animal enters to a position close to the robotic manipulation device 100, the end effector 70 provides a movement in which it fetches a milking teat cup 74 in a milking teat cup magazine in the milking stall whereupon it moves the milking teat cup 74 and the cleaning teat cup 76 to a position below the teats of the animal. During this movement the cover element 89 covers the opening to the cleaning teat cup 76. When the milking teat cup and the cleaning teat cup reach a position below the teats of an animal, the actuator 91 moves the cover element to the position in which it covers the opening of the milking teat cup 74. After that, the second actuator 88 moves the cleaning teat cup 76 to the active upper position from which it is attached to a teat of the animal. As soon as a cleaning process of the teat is finished, the cleaning teat cup 76 is removed from the teat and the second actuator 88 moves the cleaning teat cup to the inactive low position at the same time as the first actuator 87 moves the milking teat cup 74 to an active high position. After that, the robotic manipulation device 100 provides a movement at which the milking teat cup 74 is attached to the cleaned teat.

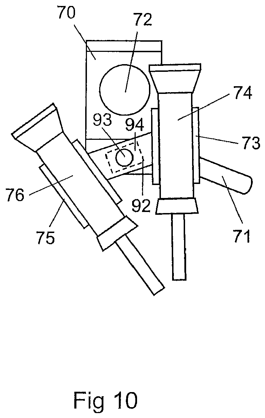

Fig. 10 illustrates a further embodiment of the end effector 70. In this case, the end effector 70 comprises a first gripping member 73 for gripping of a milking teat cup 74 and a second gripping member 75 for gripping of a cleaning teat cup 76. The gripping members 73, 75 are arranged side by side at a front portion of the end effector 70. The first gripping member 73 and the second gripping member 75 are connected to each other via a connection element 92. The gripping members 73, 75 are connected to each other in a manner such that the milking teat cup 74 and the cleaning teat cup 76 form an angle in relation to each other. The connection element 92 is pivotally arranged around a pivot 93. A schematically indicated actuator 94 is configured to rotate the connection element 92 between at least a first pivot position and a second pivot position. In the first pivot position, the milking teat cup 74 occupies an active vertical position and the cleaning teat cup 76 occupies an inactive inclined position. In the second position, the milking teat cup 74 occupies an inactive inclined position and the cleaning teat cup 76 occupies an active vertical position.

When a milking stall with an animal enters to a position close to the robotic manipulation device 100, the end effector 70 provides a movement in which it fetches a milking teat cup 74 in a milking teat cup magazine in the milking stall whereupon it moves the milking teat cup 74 and the gripped cleaning teat cup 76 to a position below the teats of the animal. In this position, the actuator 94 moves the connection element 92 to the second pivot position in which the cleaning teat cup 76 is in an active position. After that, the cleaning teat cup 76 is attached to a teat of the animal. As soon as a cleaning process of the teat is finished, the cleaning teat cup 76 is removed from the teat and the actuator 94 moves the connection element 92 to the first pivot position in which the milking teat cup 74 is in an active position. After that, the robotic manipulation device 100 provides a movement at which it attaches the milking teat cup 74 to the cleaned teat.

It shall be appreciated by a person skilled in the art that the embodiments disclosed herein are merely example embodiments, and that any details and measures are purely given as examples.

## Claims

1. A rotary milking system (1) for milking a plurality of milking animals (7) comprising a rotary milking platform (3), a plurality of milking stalls (5) arranged on the platform (3), four milking teat cups in each milking stall configured to receive milk during a milking process in the respective milking stall (5) and four robotic manipulation devices (100, 200, 300, 400), each one configured to fetch one milking teat cup (21a-d, 74) as a milking stall with an animal passes by the robotic manipulation device (100, 200, 300, 400) and provide a movement of the milking teat cup to a position below the teats of an animal, the milking system comprises cleaning teat cups (21a-d, 76) and that each robotic manipulation device(100, 200, 300, 400) is configured to move one cleaning teat cup (21a-d, 76) and one milking teat cup (21a-d, 74) by a common movement to said position below the teats before it attaches the cleaning teat cup (21a-d, 76) and the milking teat cup (21a-d, 74) to the same teat of the animal, **characterized in that** the cleaning teat cup (76) and the milking teat cup (74) which are attached to the same teat of an animal by one of the robotic manipulation devices (100, 200, 300, 400) are two separate teat cups (74, 76) and wherein each robotic manipulation device (100, 200, 300, 400) comprises at least one cover element (81, 84, 88) movably arranged between a first position in which it covers the teat receiving opening of one of the teat cups (74, 76) and a second position in which it uncover the teat receiving opening of said teat cup (74, 76).

2. A rotary milking system according to claim 1, **characterised in that** each robotic manipulation device (100, 200, 300, 400) is configured to permanently carry a cleaning teat cup (76) during operation of the rotary milking system.

3. A rotary milking system according any of claims 1 and 2, **characterised in that** each robotic manipulation device (100, 200, 300, 4₀₀) comprises at least one actuator (82, 86, 91) configured to move the cover element (18, 84, 88) between the first position and the second position.

4. A rotary milking system according to any one of the claims 1-3, **characterised in that** each robotic manipulation device (100, 200, 300, 400) comprises at least one actuator (78, 79, 87, 88, 94) configured to move the milking teat cup (74) and the cleaning teat cup (76) between an inactive position and an active position, wherein the milking teat cup and the cleaning teat cup are attached to the teat from the active position.

5. A rotary milking system according to any one of the claims 1-4, **characterised in that**, when a robotic manipulation device (100, 200, 300, 400) has moved the milking teat cup (74) and the cleaning teat cup (76) to a position below the teats of the animal, it is configured to attach the cleaning teat cup (76) to a teat of the animal, to remove the cleaning teat cup (76) from the teat when a cleaning process of the teat is finished and to attach the milking teat cup (74) to the cleaned teat.

## Patentansprüche

1. Karussellmelksystem (1) zum Melken mehrerer Milchtiere (7), umfassend eine Karussellmelkplattform (3), mehrere auf der Plattform (3) angeordnete Melkstände (5), vier Melkzitzenbecher in jedem Melkstand, die konfiguriert sind, um während eines Melkvorgangs in dem jeweiligen Melkstand (5) Milch aufzunehmen, und vier Roboterbetätigungsvorrichtungen (100, 200, 300, 400), wobei jede konfiguriert ist, um einen Melkzitzenbecher (21a-d, 74) zu holen, während ein Tier an der Roboterbetätigungsvorrichtung (100, 200, 300, 400) vorbeikommt, und eine Bewegung des Melkzitzenbechers in eine Position unterhalb der Zitzen eines Tieres bereitzustellen, wobei das Melksystem Reinigungszitzenbecher (21a-d, 76) umfasst und jede Roboterbetätigungsvorrichtung (100, 200, 300, 400) konfiguriert ist, um einen Reinigungszitzenbecher (21a-d, 76) und einen Melkzitzenbecher (21a-d, 74) durch eine gemeinsame Bewegung in die genannte Position unterhalb der Zitzen zu bewegen, bevor er den Reinigungszitzenbecher (21a-d, 76) und den Melkzitzenbecher (21a-d, 74) an dieselbe Zitze des Tieres anbringt, **dadurch gekennzeichnet, dass**
der Reinigungszitzenbecher (76) und der Melkzitzenbecher (74), die durch eine der Roboterbetätigungsvorrichtungen (100, 200, 300, 400) an dieselbe Zitze eines Tieres angebracht werden, zwei getrennte Zitzenbecher (74, 76) sind und wobei jede Roboterbetätigungsvorrichtung (100, 200, 300, 400) wenigstens ein Abdeckelement (81, 84, 88) umfasst, das zwischen einer ersten Position, in der es die Zitzenaufnahmeöffnung eines der Zitzenbecher (74, 76) abdeckt, und einer zweiten Position, in der es die Zitzenaufnahmeöffnung des Zitzenbechers (74, 76) freigibt, bewegbar angeordnet ist.

2. Karussellmelksystem nach Anspruch 1, **dadurch gekennzeichnet, dass** jede Roboterbetätigungsvorrichtung (100, 200, 300, 400) konfiguriert ist, um dauerhaft einen Reinigungszitzenbecher (76) während eines Betriebes des Karussellmelksystems zu tragen.

3. Karussellmelksystem einem der Ansprüche 1 und 2, **dadurch gekennzeichnet, dass** jede Roboterbetätigungsvorrichtung (100, 200, 300, 400) wenigstens einen Stellantrieb (82, 86, 91) umfasst, der konfiguriert ist, um das Abdeckelement (18, 84, 88) zwischen der ersten Position und der zweiten Position zu bewegen.

4. Karussellmelksystem nach einem der Ansprüche 1-3, **dadurch gekennzeichnet, dass** jede Roboterbetätigungsvorrichtung (100, 200, 300, 400) wenigstens einen Stellantrieb (78, 79, 87, 88, 94) umfasst, der konfiguriert ist, um die Melkzitzenbecher (74) und die Reinigungszitzenbecher (76) zwischen einer inaktiven Position und einer aktiven Position zu bewegen, wobei der Melkzitzenbecher und der Reinigungszitzenbecher aus der aktiven Position an der Zitze angebracht sind.

5. Karussellmelksystem nach einem der Ansprüche 1-4, **dadurch gekennzeichnet, dass**, wenn eine Roboterbetätigungsvorrichtung (100, 200, 300, 400) den Melkzitzenbecher (74) und den Reinigungszitzenbecher (76) in eine Position unterhalb der Zitzen des Tieres bewegt hat, sie konfiguriert ist, um den Reinigungszitzenbecher (76) an einer Zitze des Tieres anzubringen, den Reinigungszitzenbecher (76) von der Zitze zu entfernen, wenn ein Reinigungsvorgang der Zitze beendet ist, und den Melkzitzenbecher (74) an die gereinigte Zitze anzubringen.

## Revendications

1. Système de traite rotatif (1) pour la traite d'une pluralité d'animaux de traite (7) comprenant une plate-forme de traite rotative (3), une pluralité de stalles de traite (5) disposées sur la plate-forme (3), quatre gobelets trayeurs de traite dans chaque stalle de traite conçus pour recevoir du lait pendant un processus de traite dans la stalle de traite respective (5) et quatre dispositifs de manipulation robotique (100, 200, 300, 400), chacun étant conçu pour aller chercher un gobelet trayeur de traite (21a-d, 74) lorsqu'une stalle de traite comprenant un animal passe par le dispositif de manipulation robotique (100, 200, 300, 400) et fournir un mouvement du gobelet trayeur de traite vers une position en dessous des trayons d'un animal, le système de traite comprenant le nettoyage des gobelets trayeurs (21a-d, 76) et le fait que chaque dispositif de manipulation robotique (100, 200, 300, 400) est conçu pour déplacer un gobelet trayeur de nettoyage (21a-d, 76) et un gobelet trayeur de traite (21a-d, 74) par un mouvement commun vers ladite position sous les trayons avant de fixer le gobelet trayeur de nettoyage (21a-d, 76) et le gobelet trayeur de traite (21a-d, 74) sur le même trayon de l'animal, **caractérisé en ce que**
le gobelet trayeur de nettoyage (76) et le gobelet trayeur de traite (74) qui sont fixés au même trayon d'un animal par l'un des dispositifs de manipulation robotique (100, 200, 300, 400) sont deux gobelets trayeurs séparés (74, 76) et chaque dispositif de manipulation robotique (100, 200, 300, 400) comprenant au moins un élément de couvercle (81, 84, 88) disposé de manière mobile entre une première position dans laquelle il recouvre l'ouverture de réception de trayon de l'un des gobelets trayeurs (74, 76) et une seconde position dans laquelle il découvre l'ouverture de réception de trayon dudit gobelet trayeur (74, 76).

2. Système de traite rotatif selon la revendication 1, **caractérisé en ce que** chaque dispositif de manipulation robotique (100, 200, 300, 400) est conçu pour porter en permanence un gobelet trayeur de nettoyage (76) pendant le fonctionnement du système de traite rotatif.

3. Système de traite rotatif selon l'une quelconque des revendications 1 et 2, **caractérisé en ce que** chaque dispositif de manipulation robotique (100, 200, 300, 400) comprend au moins un actionneur (82, 86, 91) conçu pour déplacer l'élément de couvercle (18, 84, 88) entre la première position et la seconde position.

4. Système de traite rotatif selon l'une quelconque des revendications 1 à 3, **caractérisé en ce que** chaque dispositif de manipulation robotique (100, 200, 300, 400) comprend au moins un actionneur (78, 79, 87, 88, 94) conçu pour déplacer le gobelet trayeur de traite (74) et le gobelet trayeur de nettoyage (76) entre une position inactive et une position active, le gobelet trayeur de traite et le gobelet trayeur de nettoyage étant fixés au trayon depuis la position active.

5. Système de traite rotatif selon l'une quelconque des revendications 1 à 4, **caractérisé en ce que**, lorsqu'un dispositif de manipulation robotique (100, 200, 300, 400) a déplacé le gobelet trayeur de traite (74) et le gobelet trayeur de nettoyage (76) à une position en dessous des trayons de l'animal, il est conçu pour fixer le gobelet trayeur de nettoyage (76) à un trayon de l'animal, pour retirer le gobelet trayeur de nettoyage (76) du trayon lorsqu'un processus de nettoyage du trayon est terminé et pour fixer le gobelet trayeur de traite (74) au trayon nettoyé.
